# EUROPEAN PATENT SPECIFICATION

(11) **EP 3 971 310 B1**
(45) Date of publication and mention of the grant of the patent: **26.04.2023**
(21) Application number: 21742030.6
(22) Date of filing: 01.02.2021
(51) Int. Cl.: C22B 11/02, C22B 7/00

(54) **METHOD FOR PYROENRICHMENT OF PLATINUM-GROUP METALS IN ALUMINUM-BASED WASTE CATALYST**
VERFAHREN ZUR PYROANREICHERUNG VON PLATINGRUPPENMETALLEN IN EINEM ALUMINIUMBASIERTEN ABFALLKATALYSATOR
PROCÉDÉ DE PYROENRICHISSEMENT DE MÉTAUX DU GROUPE DU PLATINE DANS UN CATALYSEUR USÉ À BASE D'ALUMINIUM

(30) Priority: 19.08.2020 CN 202010835163
(43) Date of publication of application: 23.03.2022
(73) Proprietor: University Of Science And Technology Beijing, Beijing 100083 (CN)
(72) Inventor: DING, Yunji, Beijing 100083 (CN); ZHANG, Shengen, Beijing 100083 (CN)
(74) Representative: Petculescu, Ana-Maria
(86) International application number: PCT/CN2021/074719
(87) International publication number: WO 2022/001103

(56) References cited:
- CN-A- 102 534 226
- CN-A- 103 014 352
- CN-A- 103 014 352
- CN-A- 105 400 962
- CN-A- 108 441 647
- CN-A- 110 724 822
- CN-A- 110 845 144
- CN-A- 110 983 028
- CN-A- 110 983 028
- CN-A- 112 011 696
- JP-A- H06 228 671
- RU-C1- 2 360 984

## Description

### TECHNICAL FIELD

The present application is in the field of platinum group metals recovery and relates to a method for pyrometallurgical concentration of platinum group metals from spent alumina-based catalysts.

### BACKGROUND

Platinum group metals (PGMs) are widely used in automotive, petroleum, electronic appliances, chemical, aerospace, and environmental remediation fields due to their excellent physicochemical properties such as high stability, high temperature resistance, and good catalytic activity. But China's PGMs have low reserves, high usage, high foreign dependence, and contradictions in supply and demand are prominent. The petrochemical industry is an important consumer area of PGMs for hydrogenation, dehydrogenation, oxidation, reduction, isomerization, aromatization, cracking, synthesis and the like with Al₂O₃ as a supported catalyst. By 2018, China has 2.6 million companies above the scale of petroleum and chemical industries, crude oil processing breached 6.5 million tons, catalysts were used in about 6000-8000 tons and PGMs were used in about 20-25 tons, with large resource reserves.

The spent alumina-based catalysts support is high melting Al₂O₃, the conventional CaO-MgO-Al₂O₃-SiO₂ slag type has high melting point and large slag volume, which uses iron collection to produce poorly soluble ferrosilicon alloys, ultimately resulting in low platinum group metals recovery.

Currently, spent catalyst platinum group metals recovery methods for Al₂O₃ supports are mainly dominated by hydrometallurgical process, i.e., dissolution of PGMs by various oxidizing agents in an acidic environment, resulting in separation of PGMs from the support. As described in the Chinese application patent (CN201810979537.5) for alumina supported platinum-rhenium spent catalyst, sulfuric acid is used to dissolve the alumina support, followed by aqua regia to dissolve platinum, large amounts of sulfuric acid are consumed and waste water is large and environmentally burdensome. Chinese application patent (CN201910796194.3) discloses a method of palladium leaching by oxidative roasting pre-treatment followed by hydrochloric acid and chlorine-based oxidizing agents; Chinese application patent (CN201810181326.7) discloses a process of cryogenic distillation to recover organics from spent catalyst, followed by oxidative leaching of palladium using HC1 + NaCl + H₂O₂; Chinese application patent (CN201710383466.8) was first crushed and finely divided into alumina support, followed by selective dissolution of platinum using hydrochloric acid, sulfuric acid with NaCl and liquid NaClO₃; whereas the Chinese application patent (CN201810842524.3) is directed to poorly soluble α-Al₂O₃ based platinum-containing spent catalyst, it discloses alkali calcination-water immersion to dissolve the Al₂O₃ support, followed by oxidative dissolution of platinum in hydrochloric acid + sodium chlorate. The hydrometallurgical processes described above all produce large amounts of waste water, and the process of dissolving platinum group metals is prone to produce toxic gases such as Cl₂, NOₓ, and environmental pollution is severe.

Pyrometallurgical smelting has been enriched in recent years as a hot spot for research. Chinese application patent (CN201710856842.0) discloses a method for microwave heating melt collecting platinum group metals, with Ni₃S₂ as collector, addition of at least one of borax, sodium carbonate, sodium bicarbonate, sodium hydroxide, sodium peroxide, methyl cellulose slag, microwave collecting platinum group metals in spent catalysts at 1050-1200°C, this method has the advantages of low smelting temperature, high collecting rate, but the collecting process produces SO₂ and nickel is a toxic heavy metal with potential environmental risk. The Chinese application patent (CN201811156196.8) discloses a method for the co-resource of waste circuit boards with exhaust catalysts for automobiles by copper collecting platinum group metals in the spent catalysts with a recovery rate of over 98%, severe heavy metal pollution and danger of dioxin emission. Chinese application patent (CN201510797358.6) discloses melt collecting platinum group metals in spent catalysts at 1400-1450°C with nickel sulfonium as a collector, calcium oxide and silica as slag formers, wherein nickel is a toxic heavy metal and the smelting process produces SO₂. Chinese application patent (CN201911145745.6) discloses a method for recovery of platinum group metals from spent catalysts of VOCs, specifically with FeS₂ as a collector, platinum group metals collecting is good by addition of calcium oxide, sodium carbonate, calcium fluoride, borax and the like as slag formers, smelting temperature 1000-1700°C, but suffers from the drawbacks of producing SO₂ gas, large slag amount and the like. The Chinese application patent (CN201610883402.X) and literature (Kurcha, Yong, Wuchereria, Lijo, Kau, Lewis. Plasma Smelting Technology concentration of Platinum Group Metals Process [J]. Noble Metals, 2016, 37 (01): 1-5.) are directed to automotive spent catalysts. With plasma arc furnace iron collecting, the smelting temperature 1500-1800°C has advantages of short process flow and high recovery of platinum group metals, but high temperature production of ferrosilicon alloy makes subsequent platinum group metals separation difficult, eventually leading to increased cost and low recovery. Dissolution and platinum group metals recovery of iron alloys obtained by plasma smelting was investigated as in the literature (WU Xi-long, HE Xiao-tang, LI Hong-mei, ZHAO Jin-cheng, SHI Qiu-jie, TANG Yong-song, LI Yong, WANG Huan, ZHAO Yu, LEI Ting. Dissolution Research of Platinum, Palladium and Rhodium Enriched Ferroalloy [J]. Non-ferrous Metals (Smelting Parts), 2016 (03): 52-54 +67.), wherein the elemental silicon content in the iron alloy was 10-15% in iron alloy, and Fe-PGMs were found to be extremely corrosion resistant, with the leaching rates of platinum, palladium, and rhodium being 57%, 62%, and 25%, respectively in the case of using the optimal leaching process of hydrochloric acid + sodium chlorate oxidation. Chinese application patent (CN 103014352 A) discloses a method for smelting extraction of platinum group metals from alumina supported petrochemical catalysts with iron and copper as collecting agents and sodium salts as slag formers and collection of PGMs in alumina supported petrochemical catalysts at 1100-1450°C, while avoiding ferrosilicon alloy formation, does not disclose what sodium salts are to be considered.

Document CN 110983028A discloses a method for recovering platinum group metals from automobile tail gas purification waste catalysts, which belongs to the field of comprehensive utilization of platinum group metal secondary resources.

Document CN105400962A discloses a method for recycling platinum group metal from waste catalysts.

Document CN 103014352A discloses a method for smelting and extracting platinum metal from an alumina-supported petrochemical catalyst.

### SUMMARY

In view of the technical problems in the prior art that the wet leaching reagent consumption of aluminum-based waste catalysts is serious, the waste water discharge is large, and heavy metals pollution caused by pyrometallurgical copper, lead and nickel trapping, and the subsequent platinum group metal leaching rate is low due to the reduction of silicon dioxide into ferrosilicon alloy in high-temperature iron trap smelting, and the problems of high material consumption, large slag amount and the like exist, the present application provides a method for pyrometallurgical concentration of platinum group metals in aluminum-based waste catalyst. Based on the new silicon-free slag system of CaO-Al₂O₃-Fe₂O₃-B₂O₃, iron is used to trap platinum group metals from spent catalysts, which avoids heavy metals pollution and ferrosilicon alloy formation from the source, and realizes green platinum group metals, low cost, less slag quantity and high recovery rate of platinum group metals, thus having industrial application prospect.

The present application discloses a technical solution as described in claims 1 to 6.

The principles of the application are as follows:

The methods provided herein take advantage of the feature of iron forming a continuous solid solution with platinum group metals to collect platinum group metals in spent aluminum-based catalysts with non-toxic iron and avoid contamination of traditional copper, lead, nickel, etc. fire-collected heavy metals. The collecting efficiency of platinum group metals depends mainly on the viscosity and density of the smelting slag, with the lower the viscosity and the lower the density, the easier the separation of the iron alloy from the slag phase and the higher the platinum group metals recovery. The present application undergoes a eutectic reaction around 1370°C according to the CaO-Al₂O₃ binary phase diagram and then further reduces the slag phase melting point by adding Fe₂O₃ to form, with CaO, Al₂O_{3,}calcium ferrate (1100-1250°C) and calcium ferrialuminate (~ 1400°C) with lower melting points, thereby enabling the melting point of the slag phase to be lower than 1400°C when Al₂O₃ content in the slag phase is in the range 40-60 wt.%, thus forming a more mobile slag at a certain superheat (100-400°C); simultaneously B₂O₃ is introduced to produce, with CaO, Al₂O₃, a series of compounds with lower melting points such as calcium borate, aluminum borate, calcium boroaluminate and the like. Such compounds further form lower melting eutectic bodies with the above-mentioned calcium ferrites, calcium ferroaluminates, which in turn form a new slag system of CaO-Al₂O₃-Fe₂O₃-B₂O₃ of lower viscosity and density, further increasing the content of Al₂O₃ in the slag phase while increasing the recovery of platinum group metals while meeting the lower melting conditions (< 1400°C).

The beneficial effects of the present application are:
(1) the method of the present application, using the CaO-Al₂O₃-Fe₂O₃-B₂O₃ slag system, enables the avoidance of silicon introduction from a source, which thoroughly addresses the challenges of high temperature iron collecting of the conventional CaO-(MgO)-Al₂O₃-SiO₂ slag system to form ferrosilicon alloys, facilitating the efficient separation of platinum group metals and iron;
(2) the CaO-Al₂O₃-Fe₂O₃-B₂O₃slag system used in the process according to the present application has a low melting point (≤1400°C) and a high content of Al₂O₃ in the slag phase (40-60 wt.%), a low flux addition, a low slag content and an energy efficient and environmentally friendly advantage;
(3) the CaO, Al₂O₃, Fe₂O₃, B₂O₃ slag generates a series of low temperature compounds and forms low melting eutectic bodies in the process of the present application, thereby further reducing slag phase melting point, increasing slag phase composition application interval, and at the same time reducing slag phase density due to the low density of B₂O₃, facilitating sedimentation of ferrous alloy, enabling efficient separation of slag phase from ferrous alloy, increasing recovery of platinum group metals;
(4) the smelter slag produced by the process of the present application can be used to produce cement with good thermal stability, high strength and low coefficient of expansion due to its unique chemical composition, enabling the resource utilization of waste slag.

### BRIEF DESCRIPTION OF DRAWINGS

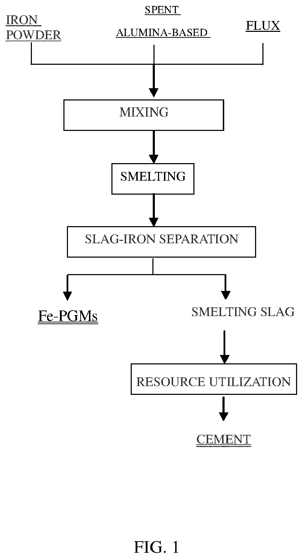

FIG. 1 is a process flow diagram illustrating a method for pyrometallurgicalconcentration of alumina-based catalysts platinum group metals in accordance with an embodiment of the application.

### DESCRIPTION OF EMBODIMENTS

Specific embodiments of the application will be described in detail below with reference to specific drawings. It should be noted that the technical features or the combination of technical features described in the following embodiments should not be considered as isolated, they can be combined with each other in order to achieve a better technical effect. In the following figures of the embodiments, like numerals appearing in various figures represent like features or components and may be applied to different embodiments.

An embodiment of the present application provides a process for pyrometallurgical concentration of platinum group metals from spent alumina-based catalysts, depicted in the process flow diagram of FIG. 1, using a novel slag system of CaO-Al₂O₃-Fe₂O₃-B₂O₃ with iron as a collector, via batch mixing followed by smelting at 1500-1800°C under oxygen partial pressure below 10⁻³ atm, and separation of slag phase from alloy phase to yield a Fe-PGMs alloy enriched in platinum group metals.

The mass fractions of CaO, Al₂O₃, Fe₂O₃, and B₂O₃ in the silica-free slag system in the inventive examples were 35-50 wt.%, 40-60 wt.%, 5-10 wt.%, 0-10 wt.%, respectively, with the sum of the four > 90%.

Embodiments of the application are described in detail below with reference to specific embodiments:

### Example 1

100 parts ofaluminum-based spent petrochemical platinum-containing catalysts were taken, fluxes CaO, Fe₂O₃, B₂O₃ were added to adjust the slag phase composition to Al₂O₃ 40 wt.%, CaO 50 wt.%, Fe₂O₃ 5 wt.%, B₂O₃ 5 wt.%, and 5 parts iron powder were added and mixed well; the mixture was placed in a smelting furnace at a smelting temperature of 1550°C, and the oxygen pressure in the furnace was controlled to 10⁻³atm; the reactants were left to stand until reaction was complete for a period of time to allow the iron alloy melt to sufficiently collect platinum and sink to the bottom of the melt. The slag-metal separation was then performed to yield a Fe-Pt alloy and smelting slag. The Pt recovery rate was detected to be 99.2% and the smelting slag was used for the production of high performance cement.

### Example 2

100 parts of aluminum-based spent petrochemical palladium-containing catalysts were taken, fluxes CaO, Fe₂O₃, B₂O₃ were added to adjust the slag phase composition to Al₂O₃ 42wt.%,CaO 40wt.%,Fe₂O₃ 5wt.%,B₂O₃ 10wt.%,Na₂O 3 wt.%, and 7 parts iron powder were added and mixed well; the mixture was placed in a smelting furnace at a smelting temperature of 1500°C, and the oxygen pressure in the furnace was controlled to 2.1 × 10⁻³ atm; the reactants were left to stand until reaction was complete for a period of time to allow the iron alloy melt to sufficiently collect palladium and sink to the bottom of the melt. The slag-metal separation was then performed to yield a Fe-Pd alloy and smelting slag. The Pd recovery rate was detected to be 99.4% and the smelting slag was used for the production of high performance cement.

### Example 3

100 parts of aluminum-based spent petrochemical platinum-containing catalysts were taken, fluxes CaO, Fe₂O₃, B₂O₃ were added to adjust the slag phase composition to Al₂O₃45wt.%,CaO 44wt.%,Fe₂O₃ 5wt.%,B₂O₃ 1wt.%,K₂O 2wt.%,Na₂O 3wt.%, and 10 parts iron powder were added and mixed well; the mixture was placed in a smelting furnace at a smelting temperature of 1600°C, and the oxygen pressure in the furnace was controlled to 3.5×10⁻³ atm; the reactants were left to stand until reaction was complete for a period of time to allow the iron alloy melt to sufficiently collect platinum and sink to the bottom of the melt. The slag-metal separation was then performed to yield a Fe-Pt alloy and smelting slag. The Pt recovery rate was detected to be 99.0% and the smelting slag was used for the production of high performance cement.

### Example 4

50 parts of aluminum-based spent petrochemical platinum-rhodium-containing catalysts and 50 parts of aluminum-based spent petrochemical palladium-containing catalysts were taken, fluxes CaO,Fe₂O₃, B₂O₃,MgO were added to adjust the slag phase composition to Al₂O₃ 50wt.%,CaO 35wt.%,Fe₂O₃ 10wt.%,B₂O₃ 3wt.%, MgO 3wt.%, and 15 parts iron powder were added and mixed well; the mixture was placed in a smelting furnace at a smelting temperature of 1650°C, and the oxygen pressure in the furnace was controlled to 4.3×10⁻³ atm; the reactants were left to stand until reaction was complete for a period of time to allow the iron alloy melt to sufficiently collect palladium and platinum and sink to the bottom of the melt. The slag-metal separation was then performed to yield a Fe-Pt/Rd alloy and smelting slag. The Pt recovery rate and Pd recovery rate were detected to be 99.2%and 99.4% respectively, and the smelting slag was used for the production of high performance cement.

### Example 5

100 parts of petroleum reforming platinum-iridium-containing spent catalysts were taken, fluxes CaO and Fe₂O₃ were added to adjust the slag phase composition to Al₂O₃ 55wt.%,CaO 40wt.%,Fe₂O₃ 5wt.%, and 20 parts iron powder were added and mixed well; the mixture was placed in a smelting furnace at a smelting temperature of 1720°C, and the oxygen pressure in the furnace was controlled to 5.2×10⁻³ atm; the reactants were left to stand until reaction was complete for a period of time to allow the iron alloy melt to sufficiently collect platinum and iridium and sink to the bottom of the melt. The slag-metal separation was then performed to yield a Fe-Pt/Ir alloy and smelting slag. The Pt recovery rate and Ir recovery rate were detected to be 99.5% and 99.2% respectively and the smelting slag was used for the production of high performance cement.

### Example 6

100 parts of aluminum-based spent petrochemical platinum-containing catalysts were taken, fluxes CaO, Fe₂O₃, B₂O₃ were added to adjust the slag phase composition to Al₂O₃ 52wt.%,CaO 40wt.%,Fe₂O₃ 6wt.%,B₂O₃2wt.%, and 25 parts iron powder were added and mixed well; the mixture was placed in a smelting furnace at a smelting temperature of 1750°C, and the oxygen pressure in the furnace was controlled to 3.7×10⁻⁴atm; the reactants were left to stand until reaction was complete for a period of time to allow the iron alloy melt to sufficiently collect platinum and sink to the bottom of the melt. The slag-metal separation was then performed to yield a Fe-Pt alloy and smelting slag. The Pt recovery rate was detected to be 99.7% and the smelting slag was used for the production of high performance cement.

### Example 7

100 parts of apetroleumhydrogenationpalladium-containing spent catalyst were taken, fluxes CaO, Fe₂O₃, B₂O₃ were added to adjust the slag phase composition to Al₂O₃ 50wt.%,CaO 42wt.%,Fe₂O₃ 5wt.%,B₂O₃ 3wt.%, and 30 parts iron powder were added and mixed well; the mixture was placed in a smelting furnace at a smelting temperature of 1700°C, and the oxygen pressure in the furnace was controlled to 2.7×10⁻⁴ atm; the reactants were left to stand until reaction was complete for a period of time to allow the iron alloy melt to sufficiently collect palladium and sink to the bottom of the melt. The slag-metal separation was then performed to yield a Fe-Pd alloy and smelting slag. The Pd recovery rate was detected to be 99.1% and the smelting slag was used for the production of high performance cement.

### Example 8

100 parts of apetroleumisomerizationplatinum-palladium-containing spent catalyst were taken, fluxes CaO, Fe₂O₃, B₂O₃ were added to adjust the slag phase composition to Al₂O₃ 48wt.%,CaO 45wt.%,Fe₂O₃ 6wt.%,B₂O₃ 1wt.%, and 35 parts iron powder were added and mixed well; the mixture was placed in a smelting furnace at a smelting temperature of 1680°C, and the oxygen pressure in the furnace was controlled to 5.4×10⁻⁴ atm; the reactants were left to stand until reaction was complete for a period of time to allow the iron alloy melt to sufficiently collect platinumand palladium and sink to the bottom of the melt. The slag-metal separation was then performed to yield a Fe-Pt/Pd alloy and smelting slag. The Pt recovery rate and Pd recovery rate were detected to be 99.4% and 99.5% respectively and the smelting slag was used for the production of high performance cement.

### Example 9

100 parts of a hydrogen peroxide industry palladium-containing spent catalyst were taken, fluxes CaO, Fe₂O₃,sodium carbonate and lithium carbonate were added to adjust the slag phase composition to Al₂O₃ 46wt.%,CaO 44wt.%,Fe₂O₃ 5wt.%,Na₂O3wt.%,Li₂O2wt.% and 40 parts iron powder were added and mixed well; the mixture was placed in a smelting furnace at a smelting temperature of 1600°C, and the oxygen pressure in the furnace was controlled to 1.3×10⁻⁵atm; the reactants were left to stand until reaction was complete for a period of time to allow the iron alloy melt to sufficiently collect palladium and sink to the bottom of the melt. The slag-metal separation was then performed to yield a Fe-Pd alloy and smelting slag. The Pd recovery rate was detected to be 99.5% and the smelting slag was used for the production of high performance cement.

### Example 10

100 parts of aluminum-based spent petrochemical platinum-rhodium-containing catalysts were taken, fluxes CaO, Fe₂O₃, B₂O₃, MgO were added to adjust the slag phase composition to Al₂O₃ 43wt.%,CaO 48wt.%,Fe₂O₃ 7wt.%,B₂O₃ 2wt.%, and 18 parts iron powder were added and mixed well; the mixture was placed in a smelting furnace at a smelting temperature of 1660°C, and the oxygen pressure in the furnace was controlled to 2.5×10⁻⁴atm; the reactants were left to stand until reaction was complete for a period of time to allow the iron alloy melt to sufficiently collect palladium and platinum and sink to the bottom of the melt. The slag-metal separation was then performed to yield a Fe-Pt/Rh alloy and smelting slag. The Pt recovery rate and Rh recovery rate were detected to be 99.6% and 99.2% respectively, and the smelting slag was used for the production of high performance cement.

### Example 11

100 parts of an acetic acidindustry aluminum-basedpalladium-containing spent catalyst were taken, fluxes CaO,Fe₂O₃,B₂O₃,MgO,MnO were added to adjust the slag phase composition to Al₂O₃ 40wt.%,CaO 40wt.%,Fe₂O₃ 5wt.%,B₂O₃ 8wt.%,MgO 4wt.%,MnO 3wt.%, and 23 parts iron powder were added and mixed well; the mixture was placed in a smelting furnace at a smelting temperature of 1520°C, and the oxygen pressure in the furnace was controlled to 4.1×10⁻⁵ atm; the reactants were left to stand until reaction was complete for a period of time to allow the iron alloy melt to sufficiently collect palladium and sink to the bottom of the melt. The slag-metal separation was then performed to yield a Fe-Pd alloy and smelting slag. The Pd recovery rate was detected to be 99.3% and the smelting slag was used for the production of high performance cement.

### Example 12

100 parts of aluminum-based spent petrochemical platinum-containing catalysts were taken, fluxes CaO, Fe₂O₃, B₂O₃, sodium carbonate and FeO were added to adjust the slag phase composition to Al₂O₃ 44wt.%, CaO 40wt.%, Fe₂O₃ 5wt.%, B₂O₃ 1wt.%, Na₂O 7wt.%, FeO 3 wt.%, and 36 parts iron powder were added and mixed well; the mixture was placed in a smelting furnace at a smelting temperature of 1550°C, and the oxygen pressure in the furnace was controlled to 1.5×10⁻⁶ atm; the reactants were left to stand until reaction was complete for a period of time to allow the iron alloy melt to sufficiently collect platinum and sink to the bottom of the melt. The slag-metal separation was then performed to yield a Fe-Pt alloy and smelting slag. The Pt recovery rate was detected to be 99.4% and the smelting slag was used for the production of high performance cement.

### Example 13

100 parts of aluminum-based spent petrochemical ruthenium-containing catalysts were taken, fluxes CaO, Fe₂O₃, B₂O₃, and sodium carbonate were added to adjust the slag phase composition to Al₂O₃ 50wt.%, CaO 35wt.%, Fe₂O₃ 7wt.%, B₂O₃ 6wt.% and Na₂O 2wt.%, and 15 parts iron powder were added and mixed well; the mixture was placed in a smelting furnace at a smelting temperature of 1740°C, and the oxygen pressure in the furnace was controlled to 3.2×10⁻⁶ atm; the reactants were left to stand until reaction was complete for a period of time to allow the iron alloy melt to sufficiently collect ruthenium and sink to the bottom of the melt. The slag-metal separation was then performed to yield a Fe-Ru alloy and smelting slag. The Ru recovery rate was detected to be 99.2% and the smelting slag was used for the production of high performance cement.

### Example 14

100 parts of aluminum-based spent petrochemical platinum-containing catalysts were taken, fluxes CaO, Fe₂O₃, B₂O₃ were added to adjust the slag phase composition to Al₂O₃54wt.%, CaO 37wt.%, Fe₂O₃ 6wt.%, B₂O₃ 3wt.%, and 12 parts iron powder were added and mixed well; the mixture was placed in a smelting furnace at a smelting temperature of 1750°C, and the oxygen pressure in the furnace was controlled to 2.4×10⁻⁶ atm; the reactants were left to stand until reaction was complete for a period of time to allow the iron alloy melt to sufficiently collect platinum and sink to the bottom of the melt. The slag-metal separation was then performed to yield a Fe-Pt alloy and smelting slag. The Pt recovery rate was detected to be 99.6% and the smelting slag was used for the production of high performance cement.

### Example 15

100 parts of aluminum-based spent petrochemical palladium-containing catalysts were taken, fluxes CaO, Fe₂O₃, B₂O₃ were added to adjust the slag phase composition to Al₂O₃ 57wt.%, CaO 35wt.%, Fe₂O₃ 5wt.%, B₂O₃ 3wt.%, and 20 parts iron powder were added and mixed well; the mixture was placed in a smelting furnace at a smelting temperature of 1780°C, and the oxygen pressure in the furnace was controlled to 6.4×10⁻⁶ atm; the reactants were left to stand until reaction was complete for a period of time to allow the iron alloy melt to sufficiently collect platinum and sink to the bottom of the melt. The slag-metal separation was then performed to yield a Fe-Pd alloy and smelting slag. The Pd recovery rate was detected to be 99.5% and the smelting slag was used for the production of high performance cement.

### Example 16

100 parts of aluminum-based spent petrochemical platinum-containing catalysts were taken, fluxes CaO, Fe₂O₃ were added to adjust the slag phase composition to Al₂O₃ 60wt.%, CaO 35wt.%, Fe₂O₃ 5wt.%, and 5 parts iron powder were added and mixed well; the mixture was placed in a smelting furnace at a smelting temperature of 1800°C, and the oxygen pressure in the furnace was controlled to 1.4×10⁻⁸ atm; the reactants were left to stand until reaction was complete for a period of time to allow the iron alloy melt to sufficiently collect platinum and sink to the bottom of the melt. The slag-metal separation was then performed to yield a Fe-Pt alloy and smelting slag. The Pt recovery rate was detected to be 99.7% and the smelting slag was used for the production of high performance cement.

## Claims

1. A method for pyrometallurgical concentration of platinum group metals from spent alumina-base catalysts, wherein the method uses iron as a collector and spent alumina-base catalysts as a recovery target, adopts a CaO-Al₂O₃-Fe₂O₃-B₂O₃ slag system to smelt and collect platinum group metals under a partial pressure of oxygen, and finally obtains a Fe-PGMs alloy through iron slag-metal separation,
wherein mass fractions of CaO, Al₂O₃, Fe₂O and B₂O₃ in the CaO-Al₂O₃-Fe₂O₃-B₂O₃ slag system is 35-50 wt.%, 40-60 wt.%, 5-10 wt.%, 0-10 wt.%, respectively; a sum of the CaO, Al₂O₃, Fe₂O₃ and B₂O₃ is > 90%.

2. The method for pyrometallurgical concentration of platinum group metals from spent alumina-based catalysts according to claim 1, wherein, any one or more of other components of Li₂O, Na₂O, K₂O, MgO, FeO, MnO, in addition to the four components CaO, Al₂O₃, Fe₂O₃ and B₂O₃ is present in the CaO-Al₂O₃-Fe₂O₃-B₂O₃ slag system, and a content of each of Li₂O, Na₂O, K₂O, MgO, FeO and MnO is 0-5 wt.%.

3. The method for pyrometallurgical concentration of platinum group metals from spent alumina-base catalysts according to claim 1, wherein the collector adopts iron powder in an amount of 5-40 wt.% of the mass of the spent alumina-base catalysts, a controlled oxygen partial pressure ≤10⁻³ atm and a smelting temperature of 1500-1800°C.

4. The method for pyrometallurgical concentration of platinum group metals from spent alumina-base catalysts according to claim 1, wherein a recovery rate of the platinum group metals is not less than 99%.

5. The method for pyrometallurgical concentration of platinum group metals from spent alumina-base catalysts according to claim 1, wherein a smelting slag produced by collecting the platinum group metals can be used to produce cement.

6. The method for pyrometallurgical concentration of platinum group metals from spent alumina-based catalysts according to claim 1, wherein the spent alumina-based catalysts are platinum group metals-containing spent catalysts supported on alumina.

## Patentansprüche

1. Verfahren zur pyrometallurgischen Anreicherung von Platingruppenmetallen aus verbrauchten Katalysatoren auf Aluminiumoxidbasis, **dadurch gekennzeichnet, dass** das Verfahren Eisen als Einfangmittel und verbrauchte Katalysatoren auf Aluminiumoxidbasis als Rückgewinnungsobjekt verwendet, ein CaO-AhO₃-Fe₂O₃-B₂O₃-Schlackensystem zum Schmelzen und Sammeln von Platingruppenmetallen unter einem bestimmten Sauerstoffpartialdruck einsetzt und schließlich eine Fe-PGMs-Legierung durch Eisenschlacke-Metall-Trennung erhält, um eine effiziente Rückgewinnung von Platingruppenmetallen zu erreichen,
wobei die Massenanteile von CaO, Al₂O₃, Fe₂O und B₂O₃ in dem CaO-AhO₃-Fe₂O₃-B₂O₃-Schlackensystem 35-50 Gew.-%, 40-60 Gew.-%, 5-10 Gew.-% bzw. 0-10 Gew.-% betragen und die Summe von CaO, Al₂O₃, Fe₂O und B₂O₃ > 90% ist.

2. Verfahren zur pyrometallurgischen Anreicherung von Platingruppenmetallen aus verbrauchten Katalysatoren auf Aluminiumoxidbasis nach Anspruch 1, **dadurch gekennzeichnet, dass** eine oder mehrere der anderen Komponenten Li₂O, Na₂O, K₂O, MgO, FeO, MnO, zusätzlich zu den vier Komponenten CaO, Al₂O₃, Fe₂O und B₂O₃, in dem CaO-AhO₃-Fe₂O₃-B₂O₃-Schlackensystem vorhanden ist, und ein Gehalt von Li₂O, Na₂O, K₂O, MgO, FeO und MnO jeweils 0-5 Gew.-% beträgt.

3. Verfahren zur pyrometallurgischen Anreicherung von Platingruppenmetallen aus verbrauchten Katalysatoren auf Aluminiumoxidbasis nach Anspruch 1, **dadurch gekennzeichnet, dass** das Einschlussmittel Eisenpulver ist, wobei die Menge des Eisenpulvers 5-40 Gew.-% der Masse des verbrauchten Katalysators auf Aluminiumbasis beträgt, und wobei der Sauerstoffpartialdruck auf ≤ 10⁻³ atm und die Schmelztemperatur auf 1500-1800°C geregelt wird.

4. Verfahren zur pyrometallurgischen Anreicherung von Platingruppenmetallen aus verbrauchten Katalysatoren auf Aluminiumoxidbasis nach Anspruch 1, **dadurch gekennzeichnet, dass** die Rückgewinnungsrate der Platingruppenmetalle nicht weniger als 99 % beträgt.

5. Verfahren zur pyrometallurgischen Anreicherung von Platingruppenmetallen aus verbrauchten Katalysatoren auf Aluminiumoxidbasis nach Anspruch 1, **dadurch gekennzeichnet, dass** eine durch das Schmelzen und Sammeln der Platingruppenmetalle erzeugte Schmelzschlacke zur Herstellung von Zement verwendet werden kann.

6. Verfahren zur pyrometallurgischen Anreicherung von Platingruppenmetallen aus verbrauchten Katalysatoren auf Aluminiumoxidbasis nach Anspruch 1, **dadurch gekennzeichnet, dass** die verbrauchten Katalysatoren auf Aluminiumoxidbasis verbrauchte Katalysatoren sind, die Platingruppenmetalle enthalten und Aluminiumoxid als Träger verwenden.

## Revendications

1. Procédé d'enrichissement pyrométallurgique de métaux du groupe platine à partir de catalyseurs usés à base d'alumine, **caractérisé en ce que**, le procédé consiste à utiliser le fer comme collecteur et des catalyseurs usés à base d'alumine comme cible de récupération, à partir d'un système de laitier CaO-Al₂O₃-Fe₂O₃-B₂O₃, fondre et collecter des métaux du groupe platine sous une pression partielle d'oxygène, séparer la laitier et les métaux pour obtenir un alliage Fe-PGM, réalisant ainsi un récupération à un haut rendement des métaux du groupe platine,
dans lequel, dans le système de laitier CaO-Al₂O₃-Fe₂O₃-B₂O₃, les fractions massiques de CaO, Al₂O₃, Fe₂O₃ et B₂O₃ sont respectivement de 35 à 50 % en poids, de 40 à 60 % en poids, de 5 à 10 % en poids et de 0 à 10 % en poids ; et une somme des CaO, Al₂O₃, Fe₂O₃ et B₂O₃ est ≥ 90%.

2. Procédé d'enrichissement pyrométallurgique de métaux du groupe platine à partir de catalyseurs usés à base d'alumine selon la revendication 1, **caractérisé en ce que**, en plus des quatre composants CaO, Al₂O₃, Fe₂O₃ et B₂O₃, le système de laitier CaO-Al₂O₃-Fe₂O₃-B₂O₃ comprend également un ou plusieurs composants parmi Li₂O, Na₂O, K₂O, MgO, FeO et MnO, et une teneur en chacun de Li₂O, Na₂O, K₂O, MgO, FeO et MnO est de 0 à 5 % en poids.

3. Procédé d'enrichissement pyrométallurgique de métaux du groupe platine à partir de catalyseurs usés à base d'alumine selon la revendication 1, **caractérisé en ce que**, le collecteur est de la poudre de fer, un taux de la poudre de fer par rapport à la masse des catalyseurs usés à base d'alumine est de 5 à 40 % en poids, la pression partielle d'oxygène contrôlée est ≤10⁻³ atm et une température de fusion est de 1500 à 1800°C.

4. Procédé d'enrichissement pyrométallurgique de métaux du groupe platine à partir de catalyseurs usés à base d'alumine selon la revendication 1, **caractérisé en ce que**, un taux de récupération des métaux du groupe du platine n'est pas inférieur à 99%.

5. Procédé d'enrichissement pyrométallurgique de métaux du groupe platine à partir de catalyseurs usés à base d'alumine selon la revendication 1, **caractérisé en ce que**, un laitier issu de la fusion et de la collection des métaux du groupe platine est utilisé pour la préparation du ciment.

6. Procédé d'enrichissement pyrométallurgique de métaux du groupe platine à partir de catalyseurs usés à base d'alumine selon la revendication 1, **caractérisé en ce que**, les catalyseurs usés à base d'alumine sont des catalyseurs usés contenant des métaux du groupe du platine véhiculés par l'alumine.
